# EUROPEAN PATENT SPECIFICATION

(11) **EP 3 162 637 B1**
(45) Date of publication and mention of the grant of the patent: **26.09.2018**
(21) Application number: 16196477.0
(22) Date of filing: 28.10.2016
(51) Int. Cl.: B60R 5/04, E05C 1/16

(54) **MOVABLE LOADING PLATFORM FOR A MOTOR VEHICLE LUGGAGE COMPARTMENT**
BEWEGLICHER LADEBODEN FÜR EINEN KRAFTFAHRZEUGKOFFERRAUM
PLATE-FORME DE CHARGEMENT MOBILE POUR COMPARTIMENT À BAGAGES D'UN VÉHICULE AUTOMOBILE

(30) Priority: 29.10.2015 IT UB20154956
(43) Date of publication of application: 03.05.2017
(73) Proprietor: FCA Italy S.p.A., 10135 Torino (IT)
(72) Inventor: VIOTTI, Francesco, 10135 Torino (IT)
(74) Representative: Lovino, Paolo

(56) References cited:
- EP-A1- 0 713 806
- EP-A1- 1 826 065
- EP-A2- 1 564 072
- US-A1- 2007 205 611

## Description

The present invention relates to a movable loading platform for a motor vehicle luggage compartment.

Motor vehicles are known whose luggage compartment is provided with a horizontal loading platform, which can be moved in height between a lowered position, adjacent to a bottom surface of the luggage compartment, and a raised position wherein the luggage compartment is divided into an upper area and a lower area. In the raised position, the loading platform can then be rotated upwards to access the lower area below.

Generally, the loading platform consists of a rigid panel, defining a surface for supporting objects (e.g. luggage), and a handle, which is coupled to said rigid panel and can be easily gripped to raise/lower the loading platform into the desired position and/or to rotate it upwards. In some solutions, the handle consists of a simple frame of substantially rectangular shape, secured to the rigid panel and defining an opening in which the user can insert his or her hand.

Despite being very simple, this solution has some drawbacks. In particular, the handle opening reduces the aesthetic value of the luggage compartment and, generally, tends to make the content present in the lower area of the luggage compartment visible when the loading platform is arranged in its raised position. In addition, small objects can accidentally fall into the lower area of the luggage compartment through the handle opening, so one needs to move the luggage and lift the loading platform to retrieve them.

EP1564072 corresponds to the preamble of claim 1 and shows a loading platform that is slidable along a longitudinal guide and is retained in a fixed position by a retaining device. The loading platform has a release device provided with a slide, which is operable by a user for unlocking the retaining device and, therefore, allowing the loading platform to slide along the guide.

The object of the present invention is to provide a movable loading platform for a motor vehicle luggage compartment, which allows the above drawbacks to be resolved in a simple and inexpensive way.

According to the present invention, a movable loading platform for a motor vehicle luggage compartment is provided, as defined in claim 1.

For a better understanding of the present invention, a preferred embodiment thereof will now be described, purely by way of non limiting example, with reference to the accompanying drawings, wherein:
- Figure 1 shows, in perspective and with parts removed for clarity, a preferred embodiment of the movable loading platform for a motor vehicle luggage compartment according to the present invention;
- Figure 2 shows the loading platform of Figure 1 in perspective, on an enlarged scale, in section on a vertical longitudinal section plane and with a further enlarged detail; and
- Figure 3 relates to a variant of the loading platform of the present invention, shown in enlarged scale and with parts removed for clarity.

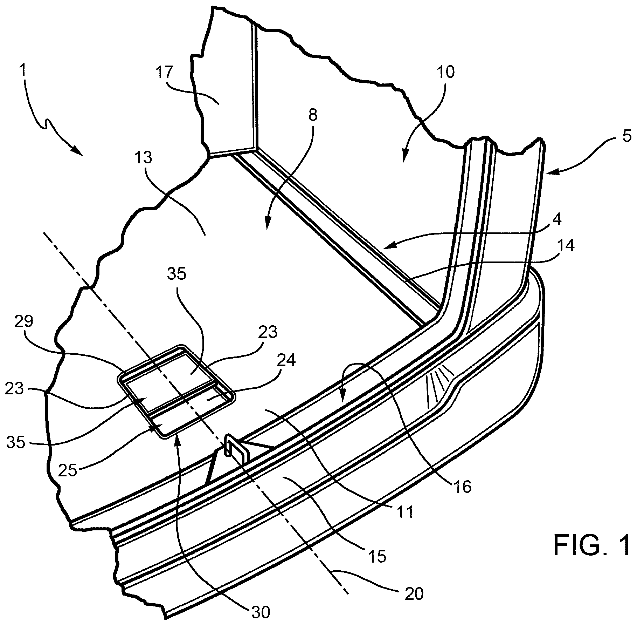

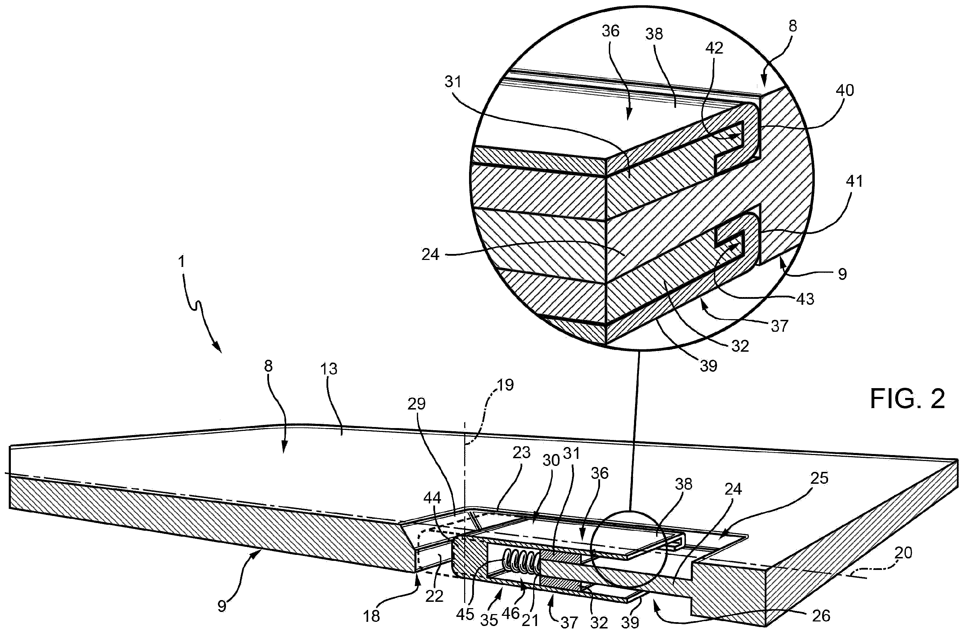

In Figure 1, the reference number 1 indicates, as a whole, a movable loading platform (partially shown) for a luggage compartment 4 of a motor vehicle 5 (also partially shown). The loading platform 1 is completely housed in the luggage compartment 4 and has an upper surface 8, defining a support for baggage or other objects, and a lower surface 9 (Fig. 2) facing a bottom floor (not shown) of the luggage compartment 4.

The position of the loading platform 1 is adjustable in height in the luggage compartment 4. In general, the loading platform 1 can be arranged in a lowered position, adjacent to the bottom floor, and at least one raised position, in which the loading platform 1 is spaced vertically from the bottom floor so as to divide the luggage compartment 4 into two parts. In other words, in the raised position, the loading platform 1 divides the luggage compartment 4 into an upper area 10, which is accessible by a user simply by opening a rear hatch (not shown) of the motor vehicle 5, and into a subfloor area (not visible in Figure 1), defined between the loading platform 1 and the bottom floor.

In particular, in the raised position, the loading platform 1 defines a trapdoor having a rear end portion 11 which can be raised or rotated upwards by the user to access the subfloor area, and hence reach objects located below the surface 9. Here and hereinafter, the terms "rear", "front", "frontal", "forward", "back", etc. are to be understood with respect to the normal direction of travel of the motor vehicle 5.

To be able to place the loading platform 1 into the different positions in height provided in the luggage compartment 1, several handling systems and/or support systems are already known. In this specific case, the loading platform 1 comprises a panel 13 having an outer edge, at least part of which is simply rested on shelves defined by the sides 14 of the luggage compartment 4 and by a rear crossbar 15 defining the lower threshold of the rear opening 16 which is closed by said hatch. The sides 14, the crossbar 15, the rear seats 17 of the motor vehicle 5 and/or any retaining systems (not shown) then allow the loading platform 1 to be firmly maintained horizontally.

As can be seen in Figure 2, the portion 11 has at least one through opening 18 along an axis 19 orthogonal to the surface 8 and, preferably, next to a middle longitudinal axis 20, which coincides with the travelling axis of the motor vehicle 5 when the loading platform 1 is horizontal.

The opening 18 is defined by a rear edge 21, a front edge 22, opposite to the edge 21, and two lateral edges 23, opposite to each other. In particular, the edges 23 are parallel to the axis 20. The portion 11 comprises a supporting plate 24, which defines the edge 21, is orthogonal to the axis 19 and, preferably, has a lower height with respect to the remaining part of the portion 11. In particular, the plate 24 is recessed with respect to both the surface 8 and the surface 9, so as to define an upper recess 25 and a lower recess 26 with respect to said surfaces.

In particular, the edge 22 is joined to the surface 8 by means of a fitting or chamfer 29, which preferably extends over the entire width of the opening 18.

The loading platform 1 also comprises a handle 30, which engages the opening 18 and is supported by the plate 24. According to a preferred aspect of the present solution, the handle 30 comprises at least two guide elements 31,32 arranged in fixed positions on an upper face and a lower face, respectively, of the plate 24. Preferably, the elements 31,32 have relatively low heights, so as to be completely housed in the recesses 25,26.

The handle 30 further comprises a slide 35 having an upper face 36 and a lower face 37 which define the gripping areas of the handle 30. Preferably, the faces 36 and/or 37 are flat and arranged flush or recessed with respect to the surfaces 8 and 9, in order to avoid interference between the handle 30 and the load placed by the user in the luggage compartment 4. In particular, the face 36 is arranged at a height slightly lower than the surface 8, to avoid that the load placed on the surface 8 rests directly on the handle 30.

The slide 35 has a C-shaped cross section when sectioned by means of a vertical plane on which the axes 19 and 20 lie, and is arranged astride the edge 21, a front part of the plate 24, and the elements 31,32.

At the rear, the slide 35 ends with an upper wall 38 and with a lower wall 39, respectively coupled to the elements 31,32 along the axis 20 in a sliding manner. In particular, the material of the elements 31,32 is such as to maintain low friction with the walls 38,39. Advantageously, as can be seen in the enlarged and sectional detail shown in Figure 2, the walls 38 and 39 end laterally with the edges 40 and 41, which are folded so as to form respective channels 42,43 which are parallel to the axis 20 and are engaged slidingly by lateral end appendages of the elements 31,32. Thanks to this coupling, the elements 31 and 32 prevent the slide 35 from translating laterally and the walls 38,39 from diverging upwards and downwards.

The slide 35 is guided along the axis 20 between a forward position (Figure 1) and a retracted position (Figure 2) and ends with a front portion 44 which, in the forward position, is arranged in contact against the edge 22 to completely close the opening 18. In the retracted position, instead, the portion 44 is spaced from the edge 22 so as to partially open the opening 18, i.e. leave a gap of a size such as to allow for inserting one's own fingers and then gripping the handle 30, in order to easily manoeuvre the loading platform 1. According to the invention, at least one elastic element 45 is provided which is positioned and preloaded such as to thrust the slide 35 into the forward position. In particular, the elastic element 45 is housed in a cavity 46 defined by the edge 21, the portion 44, and the walls 38 and 39. For example, the elastic element 45 is defined by a helical spring whose axial ends are arranged in abutment against the edge 21 and the portion 44.

In the horizontal direction orthogonal to the axes 19 and 20, the edges 23 are spaced from one another by a width substantially equal to that of the slide 35, with no additional frame between the portion 11 and the slide 35 itself.

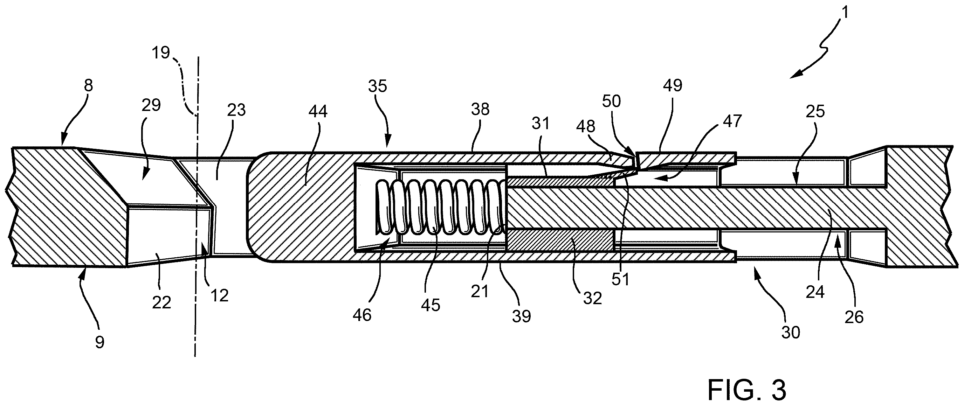

According to the variant shown in Figure 3, the handle 30 comprises a retaining device 47 which is configured so as to retain the slide 35 in its retracted position against the thrusting action of the elastic element 45 and is releasable in response to a manual release action to allow the slide 35 to slide freely into its forward position. Advantageously, the device 47 is arranged between the wall 38 and the plate 24, so as to be hidden to the user by the wall 38 itself. Advantageously, the wall 38 comprises a main portion 49 and a secondary portion 48, which is adjacent to the portion 49 and is movable with respect to the latter in response to a manual action of the user, so as to be able to cause the release of the device 47. Preferably, the portion 48 is elastically flexible with respect to the portion 49 towards the plate 24. In particular, the portion 49 has an opening engaged by the portion 48 whereby it completely surrounds the portion 48.

In particular, the device 47 comprises a stop shoulder 50, which is fixed with respect to the portion 49, is transverse to the axis 20 and is facing the portion 44. The device 47 also comprises an appendix 51 which is supported by the plate 24 and is movable between a stop position, in which it is aligned with the shoulder 50 in a direction parallel to the axis 20 to be engaged in abutment by the shoulder 50 and thus axially lock the slide 35, and a release position, in which it is lowered or deviated laterally with respect to the shoulder 50 so as to allow the shoulder 50 to move axially. Preferably, the appendix 51 is defined by a protrusion of the element 31, is elastically flexible and assumes the locking position when it is not deformed. When the slide 35 is arranged in its retracted position, shown in Figure 3, the portion 48 is located above the appendix 51, whereby a manual thrust downwards on the portion 48 leads the latter to deform the appendix 51 and to move it to the release position. At the same time, the element 31 has a shape and/or size such as to let the shoulder 50 pass axially when the slide 35 slides from the retracted position to the forward position.

As regards the mounting of the handle 30, after fixing the elements 31 and 32 on opposite sides of the plate 24, the slide 35 is fitted on the edge 21, making it slide on the chamfer or fitting 29 so as to exploit the lead-in thereof. During this operation, the walls 38 and 39 are also coupled to the elements 31,32, taking care to engage the lateral edges 40,41 to the lateral end appendages of the elements 31,32. In this regard, the slide 35 should have a certain elastic deformability to complete these coupling operations and then enter the portion 44 into the opening 18.

In use, the user's fingers can take advantage of the lead-in defined by the chamfer or fitting 29 to slightly push back the portion 44 and therefore start to retract the slide 35. When the size of the gap formed between the portion 44 and the edge 22 allow it, the user inserts his/her fingers in the opening 18, in order to then be able to easily grip the handle 30 and manoeuvre the loading platform 1. After withdrawing the fingers from the opening 18, the elastic element 45 automatically returns the slide 35 into its forward position, if the device 47 is not provided. Instead, if the handle 30 is provided with the device 47, the slide 35 is locked when it reaches the retracted position: in this condition, it is necessary to manually actuate the portion 48 to release the device 47, in addition to withdrawing the fingers from the opening 18, if it is desired for the slide 35 to go back into the forward position.

From the foregoing it is clear that the slide 35 allows the view through the opening 18 to be obstructed, and at the same time, it gives a good aesthetic value to the loading platform 1. In addition, small objects placed on the surface 8 cannot fall through the opening 18 below the loading platform 1, but at worst they stop in the recess 25, from where they can be easily collected, without having to move the loading platform 1.

The grip of the loading platform 1 by the user is relatively easy and does not differ much from what happens in known solutions devoid of the handle 30. Moreover, the handle 30 requires a relatively simple assembly procedure, as explained above, and has an extremely low number of components.

Lastly, it is clear that the loading platform 1 described and illustrated herein can be subject to modifications and variations without however departing from the scope of protection of the present invention, as defined in the appended claims.

In particular, the mode of coupling of the slide 35 to the plate 24 may be different from what has been described above by way of example; and/or the plate 24 may have a greater height or a different position with respect to what is shown in the drawings; and/or the device 47 may consist of components different from the appendix 51 and the shoulder 50 described above.

## Claims

1. A movable loading platform (1) for a luggage compartment (4) of a motor vehicle (5); the loading platform having an upper surface (8), defining a support for baggage or other objects, and a lower surface (9) adapted to be arranged in a position facing a bottom floor of said luggage compartment (4); the loading platform (1) comprising a panel (13) and a handle (30) coupled to said panel (13); said panel (13) comprising a rear portion (11) having an opening (18) passing through said upper surface (8) along an axis (19);
said handle (30) comprising:
- a slide (35), which translates along a longitudinal axis (20) between a forward position and a retracted position;
- at least one elastic element (45) being positioned and preloaded such as to thrust said slide (35) into the forward position;
**characterised in that**:
- said opening (18) is passing through said lower surface (9) along said axis (19);
- in said retracted position, said opening (18) comprises a gap, open through said panel (13) along said axis (19) and having a size such as to allow a user to insert his/her own fingers;
- in said forward position, said slide (35) completely closes said opening (18).

2. The loading platform according to claim 1, **characterised in that** said rear portion (11) comprises a supporting plate (24), which defines a rear edge (21) of said opening (18), is orthogonal to the axis (19) of the opening (18) and supports said slide (35).

3. The loading platform according to claim 2, **characterised in that** said supporting plate (24) has a height lower than the remaining part of said rear portion (11) .

4. The loading platform according to claim 3, **characterised in that** said supporting plate (24) is recessed with respect to both said upper and lower surfaces (8,9).

5. The loading platform according to any one of claims 2 to 4, **characterised in that**, when sectioning said slide (35) by means of a vertical section plane on which the axis (19) of the opening (18) and said longitudinal axis (20) lie, said slide (35) has a C-shaped cross section and is fitted astride of said supporting plate (24).

6. The loading platform according to claim 5, **characterised in that** said handle (30) comprises two guide elements (31,32) fixed on opposite faces of said supporting plate (24); said slide (35) being coupled slidingly to said guide elements (31,32).

7. The loading platform according to claim 6, **characterised in that**, on a rear side, said slide (35) ends with an upper wall (38) and with a lower wall (39), coupled respectively to said guide elements (31,32); said upper and lower walls (38, 39) ending laterally with edges (40,41) defining respective channels (42,43), which are parallel to said longitudinal axis (20) and are engaged slidingly by lateral end appendages of said guide elements (31,32).

8. The loading platform according to any one of the preceding claims, **characterised in that** said handle (30) further comprises a retaining device (47) configured so as to retain said slide (35) in the retracted position against the thrusting action of said elastic element (45) and is releasable in response to a manual release action to allow said slide (35) to slide freely into the forward position.

9. The loading platform according to claim 8, **characterised in that**:
- said rear portion (11) comprises a supporting plate (24) that supports said slide (35);
- said slide (35) comprises an upper wall (38) arranged over said supporting plate (24);
- said retaining device (47) is arranged between said upper wall (38) and said supporting plate (24).

10. The loading platform according to claim 9, **characterised in that** said upper wall (38) comprises a main portion (49) and a secondary portion (48), which is adjacent to said main portion (49) and is movable with respect to said main portion (49) towards said retaining device (47) in response to a manual action of the user so as to release said retaining device (47).

11. The loading platform according to any one of the preceding claims, **characterised in that** said opening (18) is delimited by two lateral edges (23), which are opposite each other, form part of said rear portion (11) and are spaced from each other by a width substantially equal to the width of said slide (35).

12. The loading platform according to any one of the preceding claims, **characterised in that** said slide (35) has an upper face (36) and a lower face (37), which define the gripping areas of the handle (30), are flat and are respectively arranged flush or recessed with respect to said upper and lower surfaces (8,9).

13. A luggage compartment (4) of a motor vehicle comprising a loading platform (1) according to any one of the preceding claims; the position of said loading platform (1) being adjustable in height in said luggage compartment (4).

## Patentansprüche

1. Verschiebbare Ladefläche (1) für einen Gepäckraum (4) eines Kraftfahrzeugs (5); wobei die Ladefläche eine obere Fläche (8), die eine Auflage für Gepäck oder andere Objekte definiert, und eine untere Fläche (9) aufweist, die ausgelegt ist, in einer zu einem Boden des Gepäckraums (4) weisenden Position angeordnet zu sein; wobei die Ladefläche (1) eine Platte (13) und einen Griff (30), der an die Platte (13) gekoppelt ist, umfasst; wobei die Platte (13) einen hinteren Teil (11) umfasst, der eine Öffnung (18) aufweist, die durch die obere Fläche (8) entlang einer Achse (19) verläuft; wobei der Griff (30) Folgendes umfasst:
- einen Schieber (35), der zwischen einer ausgefahrenen Position und einer eingezogenen Position entlang einer Längsachse (20) verschiebt;
- mindestens ein federndes Element (45), das so positioniert und vorgespannt ist, dass es den Schieber (35) in die ausgefahrene Position schiebt;
**dadurch gekennzeichnet, dass**
- die Öffnung (18) durch die untere Fläche (9) entlang der Achse (19) verläuft;
- in der eingezogenen Position die Öffnung (18) einen Spalt umfasst, der durch die Platte (13) entlang der Achse (19) offen ist und eine derartige Größe aufweist, dass es einem Nutzer möglich ist, seine oder ihre Finger hineinzuführen;
- in der ausgefahrenen Position der Schieber (35) die Öffnung (18) vollständig schließt.

2. Ladefläche nach Anspruch 1, **dadurch gekennzeichnet, dass** der hintere Teil (11) eine Trägerplatte (24) umfasst, die eine hintere Kante (21) der Öffnung (18) definiert, orthogonal zur Achse (19) der Öffnung (18) verläuft und den Schieber (35) trägt.

3. Ladefläche nach Anspruch 2, **dadurch gekennzeichnet, dass** die Trägerplatte (24) eine geringere Höhe als der restliche Teil des hinteren Teils (11) aufweist.

4. Ladefläche nach Anspruch 3, **dadurch gekennzeichnet, dass** die Trägerplatte (24) in Bezug auf sowohl die obere als auch die untere Fläche (8, 9) vertieft ist.

5. Ladefläche nach einem der Ansprüche 2 bis 4, **dadurch gekennzeichnet, dass**, wenn der Schieber (35) mittels einer vertikalen Schnittebene, an der die Achse (19) der Öffnung (18) und die Längsachse (20) liegen, zerteilt wird, der Schieber (35) einen C-förmigen Querschnitt aufweist und rittlings auf der Trägerplatte (24) befestigt ist.

6. Ladefläche nach Anspruch 5, **dadurch gekennzeichnet, dass** der Griff (30) zwei Führungselemente (31, 32), die an gegenüberliegenden Seiten der Trägerplatte (24) befestigt sind, umfasst; wobei der Schieber (35) gleitend an die Führungselemente (31, 32) gekoppelt ist.

7. Ladefläche nach Anspruch 6, **dadurch gekennzeichnet, dass** an einer Rückseite der Schieber (35) in einer oberen Wandung (38) und einer unteren Wandung (39) abschließt, die jeweils an die Führungselemente (31, 32) gekoppelt sind; wobei die obere und die untere Wandung (38, 39) seitlich in Kanten (40, 41) abschließen, die jeweilige Bahnen (42, 43) definieren, die parallel zur Längsachse (20) verlaufen und gleitend durch seitliche Endstücke der Führungselemente (31, 32) in Eingriff genommen werden.

8. Ladefläche nach einem der vorhergehenden Ansprüche, **dadurch gekennzeichnet, dass** der Griff (30) ferner eine Haltevorrichtung (47) umfasst, die so ausgestaltet ist, dass der Schieber (35) in der eingezogenen Position gegen den Schiebevorgang des federnden Elements (45) gehalten wird und als Reaktion auf einen manuellen Freigabevorgang, um den Schieber (35) ungehindert in die ausgefahrene Position gleiten zu lassen, freigegeben werden kann.

9. Ladefläche nach Anspruch 8, **dadurch gekennzeichnet, dass**:
- der hintere Teil (11) eine Trägerplatte (24) umfasst, die den Schieber (35) trägt;
- der Schieber (35) eine obere Wandung (38) umfasst, die über der Trägerplatte (24) angeordnet ist;
- die Haltevorrichtung (47) zwischen der oberen Wandung (38) und der Trägerplatte (24) angeordnet ist.

10. Ladefläche nach Anspruch 9, **dadurch gekennzeichnet, dass** die obere Wandung (38) einen Hauptteil (49) und einen Nebenteil (48) umfasst, der an den Hauptteil (49) angrenzt und als Reaktion auf einen manuellen Vorgang des Nutzers in Bezug auf den Hauptteil (49) zur Haltevorrichtung (47) hin bewegbar ist, wodurch die Haltevorrichtung (47) freigegeben wird.

11. Ladefläche nach einem der vorhergehenden Ansprüche, **dadurch gekennzeichnet, dass** die Öffnung (18) durch zwei seitliche Kanten (23) begrenzt wird, die einander gegenüberliegen, einen Abschnitt des hinteren Teils (11) bilden und voneinander durch eine Breite beabstandet sind, die im Wesentlichen der Breite des Schiebers (35) gleich ist.

12. Ladefläche nach einem der vorhergehenden Ansprüche, **dadurch gekennzeichnet, dass** der Schieber (35) eine obere Seite (36) und eine untere Seite (37) aufweist, die die Greifflächen des Griffs (30) definieren, flach sind und jeweils bündig oder vertieft in Bezug auf die obere und die untere Fläche (8, 9) angeordnet sind.

13. Gepäckraum (4) eines Kraftfahrzeugs, umfassend eine Ladefläche (1) nach einem der vorhergehenden Ansprüche; wobei die Position der Ladefläche (1) im Gepäckraum (4) höhenverstellbar ist.

## Revendications

1. Plateforme de chargement mobile (1) pour un compartiment à bagages (4) d'un véhicule automobile (5) ; la plateforme de chargement ayant une surface supérieure (8), définissant un support pour un bagage ou d'autres objets, et une surface inférieure (9) adaptée pour être agencée dans une position faisant face à un sol inférieur dudit compartiment à bagages (4) ; la plateforme de chargement (1) comprenant un panneau (13) et une poignée (30) couplée au dit panneau (13) ; ledit panneau (13) comprenant une partie arrière (11) ayant une ouverture (18) passant à travers ladite surface supérieure (8) le long d'un axe (19) ; ladite poignée (30) comprenant:
- une glissière (35) qui effectue une translation le long d'un axe longitudinal (20) entre une position en avant et une position rétractée ;
- au moins un élément élastique (45) étant positionné et préchargé de façon à pousser ladite glissière (35) vers la position en avant ;
**caractérisée en ce que** :
- ladite ouverture (18) passe à travers ladite surface inférieure (9) le long dudit axe (19) ;
- dans ladite position rétractée, ladite ouverture (18) comprend un espace, ouvert à travers ledit panneau (13) le long dudit axe (19) et ayant une taille telle qu'elle permet à un utilisateur d'insérer ses propres doigts ;
- dans ladite position en avant, ladite glissière (35) ferme complètement ladite ouverture (18).

2. Plateforme de chargement selon la revendication 1, **caractérisée en ce que** ladite partie arrière (11) comprend une plaque de support (24) qui définit un bord arrière (21) de ladite ouverture (18), est perpendiculaire à l'axe (19) de l'ouverture (18) et supporte ladite glissière (35).

3. Plateforme de chargement selon la revendication 2, **caractérisée en ce que** ladite plaque de support (24) a une hauteur inférieure à la partie restante de ladite partie arrière (11).

4. Plateforme de chargement selon la revendication 3, **caractérisée en ce que** ladite plaque de support (24) est en renfoncement par rapport auxdites deux surfaces supérieure et inférieure (8, 9).

5. Plateforme de chargement selon l'une quelconque des revendications 2 à 4, **caractérisée en ce que**, en séparant ladite glissière (35) au moyen d'un plan de séparation vertical sur lequel l'axe (19) de l'ouverture (18) et ledit axe longitudinal (20) reposent, ladite glissière (35) a une coupe transversale en forme de C et est ajustée à cheval sur ladite plaque de support (24).

6. Plateforme de chargement selon la revendication 5, **caractérisée en ce que** ladite poignée (30) comprend deux éléments de guidage (31, 32) fixés à des faces opposées de ladite plaque de support (24) ; ladite glissière (35) étant couplée de manière coulissante auxdits éléments de guidage (31, 32).

7. Plateforme de chargement selon la revendication 6, **caractérisée en ce que**, sur un côté arrière, ladite glissière (35) se termine par une paroi supérieure (38) et par une paroi inférieure (39), couplées respectivement auxdits éléments de guidage (31, 32) ; lesdites parois supérieure et inférieure (38, 39) se terminant de manière latérale avec des bords (40, 41) définissant des canaux respectifs (42, 43) qui sont parallèles au dit axe longitudinal (20) et qui entrent en prise de manière coulissante par des appendices d'extrémité latérale desdits éléments de guidage (31, 32).

8. Plateforme de chargement selon l'une quelconque des revendications précédentes, **caractérisée en ce que** ladite poignée (30) comprend en outre un dispositif de retenue (47) configuré de façon à retenir ladite glissière (35) dans la position rétractée contre l'action de poussée dudit élément élastique (45) et peut être libéré en réponse à une action de libération manuelle pour permettre à ladite glissière (35) de glisser librement vers la position en avant.

9. Plateforme de chargement selon la revendication 8, **caractérisée en ce que** :
- ladite partie arrière (11) comprend une plaque de support (24) qui supporte ladite glissière (35) ;
- ladite glissière (35) comprend une paroi supérieure (38) agencée sur ladite plaque de support (24) ;
- ledit dispositif de retenue (47) est agencé entre ladite paroi supérieure (38) et ladite plaque de support (24).

10. Plateforme de chargement selon la revendication 9, **caractérisée en ce que** ladite paroi supérieure (38) comprend une partie principale (49) et une partie auxiliaire (48), qui est adjacente à ladite partie principale (49) et mobile par rapport à ladite partie principale (49) vers ledit dispositif de retenue (47) en réponse à une action manuelle de l'utilisateur de façon à libérer ledit dispositif de retenue (47).

11. Plateforme de chargement selon l'une quelconque des revendications précédentes, **caractérisée en ce que** ladite ouverture (18) est délimitée par deux bords latéraux (23), qui sont opposés l'un à l'autre, forment partie de ladite partie arrière (11) et sont espacés l'un de l'autre par une largeur essentiellement égale à la largeur de ladite glissière (35).

12. Plateforme de chargement selon l'une quelconque des revendications précédentes, **caractérisée en ce que** ladite glissière (35) a une face supérieure (36) et une face inférieure (37) qui définissent les aires de saisie de la poignée (30), qui sont plates et respectivement agencées au même niveau ou en renfoncement par rapport auxdites surfaces supérieure et inférieure (8, 9).

13. Compartiment à bagages (4) d'un véhicule automobile comprenant une plateforme de chargement (1) selon l'une quelconque des revendications précédentes ; la hauteur de la position de ladite plateforme de chargement (1) étant réglable dans ledit compartiment à bagages (4).
